# EUROPÄISCHE PATENTSCHRIFT

(11) **EP 3 033 966 B1**
(45) Veröffentlichungstag und Bekanntmachung des Hinweises auf die Patenterteilung: **26.08.2020**
(21) Anmeldenummer: 14199116.6
(22) Anmeldetag: 19.12.2014
(51) Int. Cl.: A46B 3/06, A46D 3/04

(54) **Bürste und Verfahren zu deren Herstellung**
Brush and method for its production
Brosses et procédé destiné à leur fabrication

(43) Veröffentlichungstag der Anmeldung: 22.06.2016
(73) Patentinhaber: M+C Schiffer GmbH, 53577 Neustadt-Wied (DE)
(72) Erfinder: Schmidt, Eric, 56588 Waldbreitbach (DE)
(74) Vertreter: Grünecker Patent- und Rechtsanwälte PartG mbB

(56) Entgegenhaltungen:
- DE-A1-102011 017 099
- US-B2- 6 752 949

## Beschreibung

Die vorliegende Erfindung betrifft eine Bürste und ein Verfahren zur Herstellung derselben.

Bürsten werden üblicherweise aus einem spritzgegossenen Körper hergestellt, der ein oder mehrere Borstenbündel trägt. Während früher das Borstenbündel durch einen metallischen Anker in einer zuvor in den Bürstenkopfkörper eingebrachten Ausnehmung gehalten wurde, schlagen neuere Verfahren zur Herstellung von Bürsten mitunter vor, das Borstenbündel mit einer durch Anschmelzen ausgeformten Verdickung zu versehen, die beim spritzgießtechnischen Herstellen des Bürstenkopfkörpers üblicherweise mit Abstand in ein Formnest eines Spritzgießwerkzeuges eingebracht und von flüssigem Kunststoff umschmolzen wird, welcher den Bürstenkopfkörper ausbildet.

Die vorgeschriebene Technik erlaubt zwar die Ausgestaltung recht dünner Bürstenkopfkörper, geht aber mit verschiedenen Problemen einher, die insbesondere darin begründet liegen, dass in ein nicht vollständig abgeschlossenes Formnest heißer Kunststoff unter hohem Druck eingespritzt wird. Dies fordert eine exakte Verfahrensführung, da andernfalls der flüssige Kunststoff durch eine Formnestausnehmung herausgedrückt wird, welche von dem Borstenbündel durchragt wird.

Mit Blick auf dieses Problem schlägt beispielsweise die auf die Anmelderin zurückgehende DE 199 62 188 A1 vor, die Verdickung zunächst von einem ersten Borstenträger zu umgeben, der mit geringem Spritzdruck hergestellt wird und somit eine relativ schlechte Oberflächenqualität haben kann, diesen ersten Borstenträger dann mit einer zweiten Kunststoffmasse zu umhüllen, die den optischen bzw. hygienischen Anforderungen genügt.

Die US 6,752 949 B2 offenbart ein Verfahren zur Herstellung einer Zahnbürste, bei welchem zunächst ein Bürstenkörper mittels Spritzgießen hergestellt wird, der zu jedem Borstenbündel ein Sackloch aufweist. In einer Halterung werden Borstenbündel korrespondierend zu der Anordnung der Sacklöcher an den Bürstenkörper gehalten.

Das befestigungsseitige Ende der Borstenbündel wird angeschmolzen. Auch der Bürstenkörper wird im Bereich der Sacklöcher erwärmt und lokal angeschmolzen. Danach werden die Borstenbündel über die Halterung mit ihren durch Anschmelzen ausgebildeten Verdickungen jeweils in eines der Sacklöcher gedrängt. Der Durchmesser der zylindrischen Sacklöcher ist dabei größer als der Durchmesser der Verdickung, so dass die durch Erwärmen erzeugte Kunststoffschmelze in einem Ringspalt zwischen dem Borstenbündel und dem Bürstenkörper eindringen kann, dort erstarrt und das Borstenbündel stoffschlüssig mit dem Bürstenkörper verbindet.

Die in das Formnest hineinragenden Borstenbündel laufen des Weiteren Gefahr, von der in das Formnest eingespritzten Kunststoffmasse mitgerissen, jedenfalls aber hinsichtlich ihrer Lage verändert zu werden. Die Borstenbündel sollen aber üblicherweise zunächst mit der gewünschten Länge und Topographie hergestellt und erst dann mittels Spritzgießen an dem Bürstenkopfkörper befestigt werden. Eine Veränderung der Lage des Borstenbündels ist indes nicht hinnehmbar. Die ebenfalls auf die Anmelderin zurückgehende DE 199 02 129 A1 schlägt vor, das Formnest mit Strömungsbarrieren zu versehen, die in Richtung auf die Verdickung innerhalb des Formnestes abragen und das Borstenbündel an seinem befestigungsseitigen Ende teilumfänglich umgeben. Diese Strömungsbarrieren sind indes Teil des Werkzeuges und müssen jedenfalls teilweise die Verdickung freilassen, sodass Kunststoffmasse auch gegen die Verdickung anliegen und zwischen die spätere, von dem Borstenbündel durchragte Oberfläche des Bürstenkopfkörpers und die Verdickung gelangen kann, um das Borstenbündel mit der notwendigen Auszugsfestigkeit in dem Bürstenkopfkörper zu fixieren. Die DE 10 2011 017 099 A1 offenbart von der Formnestoberfläche nach innen vorspringende Stützelemente, gegen welche die Verdickung beim Spritzgießen anliegt. Auch diese Stützelemente sind auf dem Umfang des Borstenbündels verteilt vorgesehen und reichen bis zu der Verdickung, lassen indes zwischen sich Freiräume, sodass der schmelzflüssige Kunststoff bis zu dem Borstenbündel gelangen kann.

Der vorliegenden Erfindung liegt das Problem zu Grunde, eine Bürste anzugeben, die sich einfach und kostengünstig herstellen lässt. Die Bürste nach der Erfindung soll insbesondere einen dünnen Aufbau haben. Ferner will die Erfindung ein Verfahren zur Herstellung einer solchen Bürste angeben.

Zur Lösung dieses Problems wird mit der vorliegenden Erfindung eine Bürste mit den Merkmalen von Anspruch 1 angegeben. Diese Bürste hat einen Bürstenkopfkörper, der eine Ausnehmung aufweist. Es ist zumindest eine solche Ausnehmung in dem Bürstenkopfkörper vorgesehen. Auch können mehrere Ausnehmungen an dem Bürstenkopfkörper ausgeformt sein. Die Ausnehmungen sind üblicherweise beim Urformen des Bürstenkopfkörpers hergestellt. Dabei wird davon ausgegangen, dass der Bürstenkopfkörper mittels Spritzgießen aus Kunststoff hergestellt wird. Es ist allerdings möglich, den Bürstenkopfkörper in anderer Weise herzustellen, beispielsweise aus einem Halbzeug, welches zur Ausbildung der einen oder mehreren Ausnehmungen gestanzt wird. Der Bürstenkopfkörper besteht üblicherweise aber aus einem Material, welches bei Temperaturen, die im Bereich der Schmelztemperatur von Polyamid, d.h. T_{S} +/- 200 °C liegen, aufschmelzbar ist. Denn nach der vorliegenden Erfindung ist das Borstenbündel durch Verschweißen stoffschlüssig mit dem Bürstenkopfkörper verbunden. Hierzu ist an dem befestigungsseitigen Ende des Borstenbündels in an sich bekannter Weise eine Verdickung vorgesehen, die durch Anschmelzen ausgebildet ist. Bei der Verdickung handelt es sich dementsprechend um einen aufgeschmolzenen, nachfolgend aber wieder erstarrten Bereich des Borstenbündels. Üblicherweise führt das Anschmelzen des Borstenbündels an seinem befestigungsseitigen Ende dazu, dass sich eine Verdickung ausbildet, die das eigentliche Borstenbündel radial überragt und nach Art eines Pilzkopfes das Bündel an Filamenten abdeckt.

Die beim Anschmelzen sich ergebende Schmelze aus dem Werkstoff des Borstenbündels ist gemäß der vorliegenden Erfindung gegen einen Kragen angelegt, der das Borstenbündel umfänglich, jedoch üblicherweise mit sehr geringem Spiel umgibt und der durch das Material des Bürstenkopfkörpers ausgeformt wird. Ein Kragen in diesem Sinne muss nicht notwendigerweise nach Art eines Zylinders von einer rückseitigen Oberfläche des Bürstenkopfkörpers abstehen. Vielmehr kann der zuvor erwähnte Kragen auch Bestandteil einer größeren rückseitigen Oberfläche des Bürstenkopfkörpers sein. Ein definierter Kragen, der üblicherweise in etwa einen Außendurchmesser entsprechend dem Außendurchmesser der durch Anschmelzen gebildeten Verdickung hat, ist indes zu bevorzugen. Ein solcher Kragen steht nach Art eines Zylinders von der Oberfläche des Bürstenkopfkörpers ab. Der Kragen kann eine freie Stirnseite haben, die in Bezug auf eine rückseitige Oberfläche des Bürstenkopfkörpers nach innen versetzt, d.h. in Richtung auf eine von dem Borstenbündel durchragte nutzungsseitige Oberfläche verlagert vorgesehen ist. Durch die stoffschlüssige Verbindung zwischen der Verdickung und dem Kragen ist das Borstenbündel mit dem Bürstenkopfkörper verbunden. Dadurch ergibt sich eine den praktischen Anforderungen genügende Auszugsfestigkeit, sodass das Borstenbündel unverlierbar an dem Bürstenkopfkörper vorgesehen ist. Bereits diese stoffschlüssige Verbindung reicht aus, um eine Bürste insgesamt herzustellen. In ihrer einfachen Ausgestaltung hat die erfindungsgemäße Bürste dementsprechend lediglich den Bürstenkopfkörper und das zumindest eine in der erfindungsgemäßen Weise daran befestigte Borstenbündel. Damit kann eine sehr einfache Bürste kostengünstig hergestellt werden.

Mit Blick auf eine möglichst solide Befestigung und auch eine Abdichtung des Borstenbündels an seinem befestigungsseitigen Ende gegenüber dem Bürstenkopfkörper ist es zu bevorzugen, eine durch den Kragen ausgeformte Stirnseite vollständig mit der Verdickung durch Anschmelzen zu verbinden. Somit ergibt sich eine vollumfängliche Einsiegelung des Borstenbündels an dem Kragen und damit dem Bürstenkopfkörper.

Es sind verschiedene Ausgestaltungen der erfindungsgemäßen Bürste denkbar. Mit Blick auf eine möglichst ansprechende ästhetische Gestaltung ist der Bürstenkopfkörper an seiner Rückseite, die gegenüberliegend zu einer Vorderseite vorgesehen ist, welche von dem Borstenbündel durchragt wird, mit einem Überzug versehen. Dieser Überzug deckt zumindest den angeschmolzenen Bereich des Borstenbündels ab. Bei dem Überzug kann es sich um einen weichelastischen Überzug beispielsweise aus TPE handeln. Als weichelastischer Überzug wird ein Werkstoff angesehen, der eine Härte Shore A von nicht mehr als 80 hat. Der Bürstenkopfkörper ist üblicherweise aus einer Hartkomponente gebildet. Hierunter versteht man einen Werkstoff ausgewählt aus der Gruppe bestehend aus PP, PA, PET, ABS, PBT und PE. Der Bürstenkopfkörper kann einteilig auch Griffbereiche der Bürste ausbilden. Er kann ebenso gut lediglich als Plättchen ausgebildet und auf den Bereich des eigentlichen Bürstenkopfes beschränkt und mit einem separaten Griffstil zur Handhabung der Bürste verbunden sein. Insbesondere bei der Herstellung von Zahnbürsten bildet der Bürstenkopfkörper üblicherweise einen Grundkörper aus einer Hartkomponente, der jedenfalls auch teilweise den Griffstil der Bürste ausbildet und üblicherweise zumindest rückseitig mit einem Überzug gebildet durch eine Umspritzung versehen ist. Bei dieser Umspritzung kann es sich um eine Hartkomponente oder eine Weichkomponente handeln. Die Spritzung wird mit dem Ziel vorgesehen, eine möglichst ebene und absatzfreie Oberfläche auch an der Rückseite der Bürste vorzusehen, sodass sich Bakterien und Verschmutzung nicht einnisten können.

Sofern der Kragen als separates Bauteil von der benachbarten Oberfläche des Bürstenkopfkörpers abragt, hat dieser einen Durchmesser vorzugsweise von nicht mehr als 1,4, bevorzugt nicht mehr als 1,85 und besonders bevorzugt nicht mehr als 1,05 des Durchmessers des Kragens. Der Krage muss filigran sein, um während des relativ kurzen Anschmelzvorgangs - welchen die dünnen Filamente benötigen - mit angeschmolzen zu werden. Der Kragen hat vorzugsweise eine konische Außenumfangsfläche, die sich bevorzugt in Richtung auf das freie Ende des Kragens verjüngt. Der Innendruckmesser des Kragens entspricht in etwa dem Außendurchmesser des Borstenbündels, so dass dieses eng in der Ausnehmung auch im Bereich des Kragens gefasst ist.

Die vorliegende Erfindung schlägt ferner ein Verfahren zur Herstellung einer Bürste der eingangs genannten Art vor. Bei diesem Verfahren wird ein Bürstenkopfkörper aus einem Kunststoff hergestellt und mit zumindest einer Ausnehmung versehen. Wie bereits erwähnt kann diese Ausnehmung beim Urformen des Bürstenkopfkörpers oder aber nachträglich als Bohrung oder Ausstanzung vorgesehen werden. Danach wird ein Borstenbündel in die Ausnehmung eingebracht. Dieses Borstenbündel wird an seinem befestigungsseitigen Ende angeschmolzen. Danach wird das Borstenbündel mit dem Bürstenkopfkörper verbunden. Die Verbindung ist üblicherweise eine stoffschlüssige Verbindung, die vorzugsweise durch Anschmelzen der Verdickung und Anlegen der so hergestellten Schmelze gegen den Bürstenkopfkörper erzielt wird.

Gemäß einer bevorzugten Weiterbildung der vorliegenden Erfindung wird das befestigungsseitige Ende des Borstenbündels vor dem Anschmelzen mit Abstand zu einer Oberfläche, beispielsweise mit Abstand zu einer freien Stirnseite eines an dem Bürstenkopfkörper ausgebildeten Kragens angeordnet und beim Anschmelzen des Borstenbündels erzeugte Schmelze gegen die freie Oberfläche des Bürstenkopfkörpers gedrängt. Dieses Drängen der Schmelze kann durch eine innere Kraft der Schmelze erzeugt werden, beispielsweise durch die Rückstellung der Schmelze aufgrund einer Reorientierung der Molekülketten der gereckten Filamente, die das Borstenbündel ausformen. Es kann aber auch eine äußere Kraft sein, beispielsweise ein Luftstrom, der von der Befestigungsseite gegen das Borstenbündel angeströmt wird und dessen Konvektion die Schmelze in Richtung auf den Kragen drängt.

Gemäß einer weiteren bevorzugen Ausgestaltung des erfindungsgemäßen Verfahrens wird die Schmelze gegen den Bürstenkopfkörper gedrückt. Hierzu wird üblicherweise ein Stempel gegen die noch schmelzflüssige Verdickung angelegt, der die Schmelze der Verdickung gegen den Bürstenkopfkörper, vorzugsweise einen durch den Bürstenkopfkörper ausgebildeten Kragen andrückt. Durch diese Verfahrensführung wird die stoffschlüssige Verbindung zwischen dem Bürstenkopfkörper und dem Borstenbündel verbessert und eine etwaige Dichtigkeit erhöht.

Weitere Einzelheiten und Vorteile der vorliegenden Erfindung ergeben sie aus der nachfolgenden Beschreibung eines Ausführungsbeispiels in Verbindung mit der Zeichnung. In dieser zeigen:
- Figur 1: eine schematische Schnittansicht eines Teils eines Bürstenkopfkörpers;
- Figur 2: das in Figur 1 gezeigte Detail des Bürstenkopfkörper nach dem Einführen eines Borstenbündels;
- Figur 3: stilisiert das in den Figuren 1 und 2 gezeigte Ausführungsbeispiel beim Anschmelzen des Borstenbündels und
- Figur 4: das Borstenbündel nach dem Verschweißen mit dem Bürstenkopfkörper in dem Ausführungsbeispiel nach den Figuren 1-3.

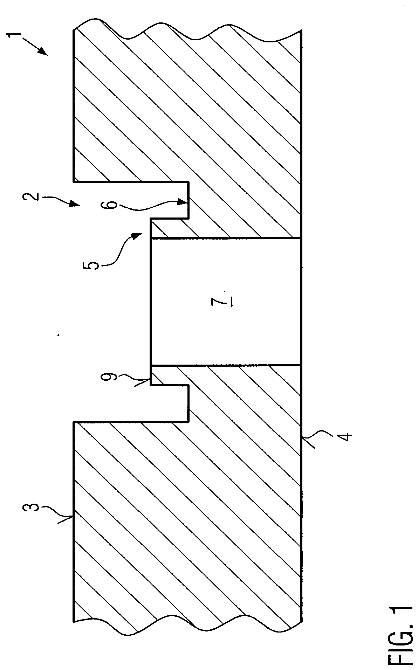

Die Figur 1 zeigt einen Bürstenkopfkörper 1 in einer Schnittdarstellung. Der Bürstenkopfkörper 1 hat eine Aussparung 2, die gegenüber einer Rückseite 3 nach innen versetzt und somit zwischen dieser Rückseite 3 und einer Vorderseite 4 vorgesehen ist. In der Aussparung 2 befindet sich ein durch das Material des Bürstenkopfkörpers 1 ausgebildeter Kragen 5, der einen Boden 6 der Aussparung 2 in Richtung auf die Rückseite 3 hin überragt. So bildet der Boden 6 einen ringförmigen Spalt um den Kragen 5 herum. Der Kragen 5 ist Teil einer durchgehenden absatzfreien Ausnehmung 7, die in dem Bürstenkopfkörper 1 ausgespart ist.

Bei dem gezeigten Ausführungsbeispiel besteht der Bürstenkopfkörper 1 aus einer Kunststoffkomponente, beispielsweise PP oder PA.

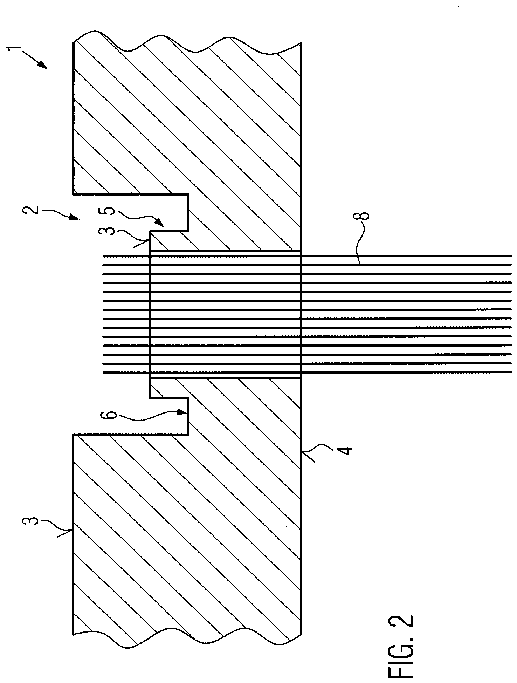

In Figur 2 ist zusätzlich zu den Einzelheiten nach Figur 1 ein Borstenbündel 8 dargestellt, welches in die Ausnehmung 7 eingebracht ist. Ein befestigungsseitiges Ende des Borstenbündels 8 überragt eine freie Stirnseite 9 des Kragens 5. Der Abstand zwischen dem freien Ende des Borstenbündels 8 und der Stirnseite 9 des Kragens beträgt etwa 1 bis 2,5 des Durchmessers des Borstenbündels 8. In der in Figur 2 gezeigten Position wird das Borstenbündel 8 nunmehr axial fixiert, beispielsweise durch eine Halteplatte, die gegen das nutzungseitige Ende des Borstenbündels drückt.

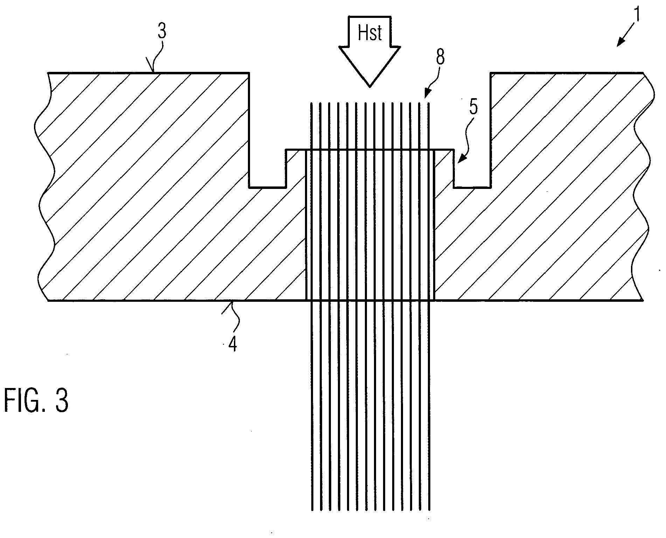

Figur 3 verdeutlicht den Verfahrensschritt des Anschmelzens des Borstenbündels 8. Hierzu wird bei dem gezeigten Ausführungsbeispiel heiße Luft mit einem Strom S endseitig gegen das befestigungsseitige Endes des Borstenbündels 8 angeströmt. Die heiße Luft schmilzt das Borstenbündel 8 auf. Hierdurch entwickelt sich Schmelze, die sowohl benachbarte Filamente des Borstenbündels 8 miteinander verbindet als auch bis zu dem Kragen 5 gelangt. Die auf das Borstenbündel 8 aufgebrachte heiße Luft erwärmt auch die freie Stirnseite 9 des Kragens 5 und schmelzt diese an. So ergibt sich eine Verschweißung zwischen einer mit Bezugszeichen 10 gekennzeichneten Verdickung des Borstenbündels 8 und dem Kragen 5. Die Verdickung 10 kann auch durch Anlegen einer heißen Platte oder die Strahlungswärme einer starken Lichtquelle erzeugt werden.

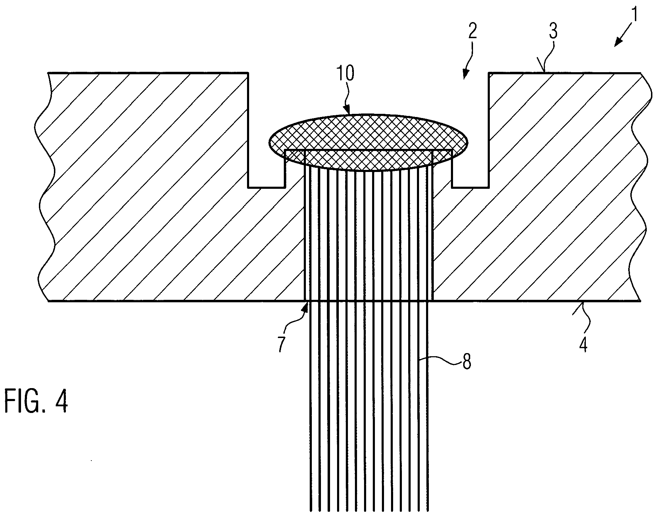

Wie die Figur 4 verdeutlicht, ergibt sich eine stoffschlüssige und solide Verbindung zwischen dem Borstenbündel 8 und dem Bürstenkopfkörper 1. Auf diese Weise ist die Bürste in ihrer Grundform hergestellt. Die Rückseite 3 kann noch mit einem Überzug versehen sein, um die Aussparung 2 zu überdecken und eine ebene und ästhetisch ansprechende Gestaltung auch an der Rückseite der späteren Bürste zu erzeugen. An dem fertigen Erzeugnis wird die Vorderseite 4 des Bürstenkopfkörpers 1 von dem nutzungsseitigen Ende des Borstenbündels 8 überragt. Durch die stoffschlüssige Verbindung ist das Borstenbündel 8 sicher mit dem Bürstenkopfkörper 1 verbunden.

### Bezugszeichenliste

- 1: Bürstenkopfkörper
- 2: Aussparung
- 3: Rückseite
- 4: Vorderseite
- 5: Kragen
- 6: Boden
- 7: Ausnehmung
- 8: Borstenbündel
- 9: freie Stirnseite
- 10: Verdickung

## Patentansprüche

1. Bürste mit einem Bürstenkopfkörper (1), der eine von einem Borstenbündel (8) durchragte Ausnehmung (7) aufweist, dessen befestigungsseitiges Ende durch Anschmelzen mit einer Verdickung (10) zur Befestigung des Borstenbündels (8) an dem Bürstenkopfkörper (1) versehen ist,
**dadurch gekennzeichnet,**
**dass** der Bürstenkopfkörper (1) einen sich bis zu der Verdickung (10) erstreckenden und das Borstenbündel (8) umfänglich umgebenden Kragen (5) ausbildet, der gegenüber einer von dem Borstenbündel (8) nutzungsseitig überragten Oberfläche des Bürstenkopfkörpers (1) beanstandet vorgesehen und durch Anschmelzen mit der Verdickung (10) stoffschlüssig verbunden ist.

2. Bürste nach Anspruch 1, **dadurch gekennzeichnet, dass** eine durch den Kragen (5) ausgeformte Stirnseite (9) vollständig mit der Verdickung (10) durch Anschmelzen verbunden ist.

3. Bürste nach einem der vorherigen Ansprüche, **dadurch gekennzeichnet, dass** der Kragen (5) eine konische Außenumfangsfläche hat.

4. Bürste nach einem der vorherigen Ansprüche, **dadurch gekennzeichnet, dass** eine freie Stirnseite (9) des Kragens (5) zwischen einer Vorderseite (4) des Bürstenkopfkörpers (1), die von dem Borstenbündel (8) nutzungsseitig durchragt wird, und einer sich im Wesentlichen parallel hierzu erstreckenden Rückseite (3) des Bürstenkopfkörpers (1) vorgesehen ist.

5. Verfahren zum Herstellen einer Bürste, bei dem ein Bürstenkopfkörper (1) hergestellt und zumindest eine Ausnehmung (7) an dem Bürstenkopfkörper (1) vorgesehen wird, ein Borstenbündel (8) in die Ausnehmung (7) eingebracht, an seinem befestigungsseitigen Ende geschmolzen und eine Verdickung (10) ausbildend stoffschlüssig mit einem das Borstenbündel (8) umfänglich umgebenden Kragen (5) des Bürstenkopfkörpers (1) verbunden wird, wobei sich der Kragen (5) bis zu der Verdickung (10) erstreckt und gegenüber einer von dem Borstenbündel (8) nutzungsseitig überragten Oberfläche des Bürstenkopfkörpers (1) beanstandet vorgesehen ist.

6. Verfahren nach Anspruch 6, **dadurch gekennzeichnet, dass** der Bürstenkopfkörper (1) aus dem gleichen Kunststoff wie Filamente des Borstenbündels (8) hergestellt wird.

7. Verfahren nach Anspruch 5 oder 6, **dadurch gekennzeichnet, dass** das befestigungsseitige Ende des Borstenbündels (8) vor dem Anschmelzen mit Abstand zu einer Oberfäche (3) des Bürstenkopfkörpers (1) angeordnet und beim Anschmelzen des Borstenbündels (8) erzeugte Schmelze gegen die Oberfläche (3) gedrängt wird.

8. Verfahren nach einem der Ansprüche 5 bis 7, **dadurch gekennzeichnet, dass** die Schmelze gegen die Oberfläche (3) gedrückt wird.

9. Verfahren nach einem der Ansprüche 5 bis 8, **dadurch gekennzeichnet, dass** der Bürstenkopfträger (1) an seiner dem nutzungsseitigen Ende des Borstenbündels (8) gegenüberliegenden Rückseite (3) mit einem Überzug versehen wird.

## Claims

1. Brush having a brush head body (1) which comprises a recess (7) through which a bundle of bristles (8) passes, the securing-side end of which is provided by means of a melt process with a thickened portion (10) for securing the bundle of bristles (8) to the brush head body (1), **characterized in**
**that** the brush head body (1) forms a collar (5) which extends up to the thickened portion (10) and circumferentially surrounds the bundle of bristles (8) and which is provided at a distance from a brush head body (1) surface projected over by the bundle of bristles (8) at the use side, and is bonded to the thickened portion (10) by means of a melting process.

2. Brush according to claim 1, **characterized in that** a front side (9) which is shaped by the collar (5) is fully connected to the thickened portion (10) by means of a melting process.

3. Brush according to any one of the preceding claims, **characterized in that** the collar (5) has a conical outer circumferential surface.

4. Brush according to any one of the preceding claims, **characterized in that** a free front side (9) of the collar (5) is provided between a front side (4) of the brush head body (1) through which the bundle of bristles (8) passes at the use side, and a rear side (3) of the brush head body (1) which extends substantially in parallel therewith.

5. Method for manufacturing a brush, wherein a brush head body (1) is produced and at least one recess (7) is provided at the brush head body (1), a bundle of bristles (8) is introduced into the recess (7), melted on its securing-side end and, by forming a thickened portion (10), bonded to a collar (5) of the brush head body (1), which circumferentially surrounds the bundle of bristles (8), wherein the collar (5) extends up to the thickened portion (10) and is provided at a distance from a brush head body (1) surface projected over by the bundle of bristles (8) at the use side.

6. Method according to claim 6, **characterized in that** the brush head body (1) and filaments of the bundle of bristles (8) are made of the same plastic material.

7. Method according to claim 5 or 6, **characterized in that** the securing-side end of the bundle of bristles (8) is arranged prior to melting at a distance from a surface (3) of the brush head body (1) and melt produced during melting of the bundle of bristles (8) is urged against the surface (3).

8. Method according to any one of claims 5 to 7, **characterized in that** the melt is pushed against the surface (3).

9. Method according to any one of claims 5 to 8, **characterized in that** the brush head body (1) is provided with a coating at its rear side (3) which is opposite the use-side end of the bundle of bristles (8).

## Revendications

1. Brosse avec un corps de tête de brosse (1), qui présente un évidement (7) à travers lequel fait saillie un faisceau de poils (8), dont l'extrémité côté fixation est pourvue, par fusion, d'un épaississement (10) pour la fixation du faisceau de poils (8) sur le corps de tête de brosse (1), **caractérisée en ce que l'**épaississement (10) est constitué d'un matériau résistant à la corrosion,
**en ce que** le corps de la tête de brosse (1) forme une collerette (5) qui s'étend jusqu'à la partie épaissie (10), entoure le faisceau de poils (8) sur la circonférence, est prévu à distance d'une surface du corps de la tête de brosse (1) qui est dépassée par le faisceau de poils (8) du côté de l'utilisation et est relié à la partie épaissie (10) par fusion.

2. Brosse selon la revendication 1, **caractérisée en ce qu'**une face d'extrémité (9) formée par le collier (5) est entièrement reliée à la partie épaissie (10) par fusion.

3. Brosse selon l'une des revendications précédentes, **caractérisée en ce que** le collier (5) a une surface circonférentielle extérieure conique.

4. Brosse selon l'une des revendications précédentes, **caractérisée en ce qu'**une face d'extrémité libre (9) de la collerette (5) est prévue entre une face avant (4) du corps de tête de brosse (1), à travers laquelle le faisceau de poils (8) fait saillie du côté de l'utilisation, et une face arrière (3) du corps de tête de brosse (1) s'étendant sensiblement parallèlement à celle-ci.

5. Procédé de fabrication d'une brosse, dans lequel un corps de tête de brosse (1) est fabriqué et au moins un évidement (7) est prévu sur le corps de tête de brosse (1), un faisceau de poils (8) est introduit dans l'évidement (7), est fondu à son extrémité côté fixation et, en formant un épaississement (10), est relié d'une manière matériellement solidaire à une collerette (5) du corps de tête de brosse (1), laquelle collerette entoure de manière circonférentielle le faisceau de poils (8), la collerette (5) s'étendant jusqu'à l'épaississement (10) et étant prévu à distance d'une surface du corps de tête de brosse (1), laquelle surface est dépassée par le faisceau de poils (8) du côté utilisation.

6. Procédé selon la revendication 6, **caractérisé en ce que** le corps de la tête de brosse (1) est constitué de la même matière plastique que les filaments du faisceau de poils (8).

7. Procédé selon les revendications 5 ou 6, **caractérisé en ce que** l'extrémité côté fixation du faisceau de poils (8) est disposée à distance d'une surface (3) du corps de tête de brosse (1) avant la fusion et la masse fondue produite lors de la fusion du faisceau de poils (8) est pressée contre la surface (3).

8. Procédé selon l'une des revendications 5 à 7, **caractérisé en ce que** la masse fondue est pressée contre la surface (3).

9. Procédé selon l'une des revendications 5 à 8, **caractérisé en ce que** le support de tête de brosse (1) est pourvu d'un revêtement sur sa face arrière (3) opposée à l'extrémité côté utilisation du faisceau de poils (8).
